# EUROPEAN PATENT SPECIFICATION

(11) **EP 4 261 034 B1**
(45) Date of publication and mention of the grant of the patent: **18.02.2026**
(21) Application number: 22167832.9
(22) Date of filing: 12.04.2022
(51) Int. Cl.: B32B 27/08, B32B 3/30, B32B 3/26, G10K 11/168, G10K 11/172

(54) **SOUND ABSORBENT DEVICE**
SCHALLDÄMPFUNGSVORRICHTUNG
DISPOSITIF ABSORBANT LE BRUIT

(43) Date of publication of application: 18.10.2023
(73) Proprietor: VOLVO TRUCK CORPORATION, 405 08 Göteborg (SE)
(72) Inventor: PRESEZNIAK, Flavio, 412 55 Göteborg (SE)
(74) Representative: Kransell & Wennborg KB

(56) References cited:
- FR-A1- 3 031 077
- US-A1- 2011 139 542
- US-A1- 2018 245 515

## Description

### Technical field

The present disclosure relates to devices for absorbing sound, such as noise from a vehicle drivetrain.

### Background

Vehicle drivetrains are prone to generate noise at operation of the vehicle. For example, combustion engines and transmissions emit noise. Sound absorbents are commonly provided in the engine compartment to suppress noise emitted and prevent noise from reaching the driver/passenger compartment and/or the surroundings of the vehicle. For example, various high-density foams or bitumen mats may be attached to the chassis of the vehicle to dampen noise.

US 2018/245515 A1 discloses an acoustic liner with a support layer having a set of partitioned cavities with open faces, a first facing sheet and second facing sheet both having perforations and operably coupled to the support layer such that the facing sheets overlie and close the open faces, and an aerogel layer operably coupled to the second facing sheet.

A problem with many sound absorbents is that they better dampen higher frequency sound than lower frequency sound. In order for an absorbent mat/foam to be able to properly dampen lower frequency sound, its thickness has to be increased considerably. Space constraints in the engine compartment typically limit the possibilities of increasing the size of sound absorbents.

Hence, there is a need for a better way in which to suppress noise emitted in engine compartments of a vehicle.

### Summary

An object of the present disclosure is thus to provide for improved noise damping in an engine compartment of a vehicle.

According to a first aspect of the present disclosure, the object is achieved by a sound absorbent device as defined in appended claim 1, with various alternative embodiments defined in the dependent claims.

The absorbent device comprises a base layer and a cover layer. The base layer comprises at least one compartment. The cover layer is attached to base layer such that a respective cavity is formed in each compartment. The cover layer comprises, for each compartment, a respective opening through the cover layer to each respective cavity. Further, each opening through the cover layer is configured such that a respective Helmholz resonator is formed in each compartment. The sound transmission loss panel is formed by moulding of a composite material comprising reinforcement fibers embedded in a matrix substance.

The provision of such a sound absorbent device comprising one or more compartments configured as Helmholz resonators enable efficient sound damping of low frequency sound. By providing the resonators as compartment(s) in a base layer covered by a cover layer, a space-efficient sheet-like structure is achieved which is easy to tailor to available space in an engine compartment.

The base layer comprises a sound transmission loss panel sandwiched to the base layer on the opposite side of the base layer with respect to the cover layer.

The sound transmission loss panel provides damping of higher frequency sound than sound for which the resonators of the base layer are tuned, thus improving noise reduction for a broader range of frequencies within the same footprint as the sound absorbent device. It should be understood that the base layer and the cover layer work together according to the Helmholz principle and may not be able to efficiently prevent sound of certain frequencies from being transmitted through the base layer and the cover layer, wherein the addition of the sound transmission loss panel works by either by providing a double layer with an air layer in between (a panel with an inner void) or by adding a layer damping using mass of the sound transmission loss panel, thereby mitigating transmission of sound through the sound transmission loss panel.

The void functions to reduce sound transmission between wall portions of solid material enclosing the void.

The base layer may have a thickness in the range of 5-35 mm. Further, the base layer may have uniform thickness. With a uniform thickness of the base layer, the base layer is easy to manufacture and easy to position in the vehicle compartment. The uniform thickness of the base layer is further easy to provide with combination of compartments of different size to cater for Helmholz resonators tuned for resonating at different frequencies.

The base layer may be a panel. Further, the cover layer may be a sheet or plate.

The compartments have a depth in the range of 5-35 mm or a depth of at least 80% of the thickness of the base layer.

The cover layer may have a thickness in the range of 1-15 mm.

The cover layer may have uniform thickness.

A uniform thickness of the cover layer is easy to manufacture. The thickness of the cover layer is chosen such that suitable necks are formed at each Helmholz resonator formed at each compartment.

The cover layer may have a thickness of less than 20% of the thickness of the base layer. Such a configuration uses the base layer to provide the inner volume of the resonator and the relatively thin cover layer to seal or close the compartment(s) of the base layer for form the respective cavity of the Helmholz resonator(s).

The base layer may comprise a plurality of compartments, wherein each compartment is tuned for resonating at a different resonance frequency than the other ones of the compartments.

The provision of a combination of resonators tuned to resonate at different frequencies enable sound damping of different portions of a spectrum of sound/noise, thereby enabling damping of a greater range of frequencies of noise from one sound absorbent device.

The base layer may comprise at least four of said plurality of compartments.

By providing at least four differently tuned resonators, it has been found that a good sound damping performance over a low frequency range of sound is enabled, such as in a range of 25-1000 Hz. For example, a first resonator may be tuned to 200 Hz, a second resonator tuned to 250 Hz, a third resonator tuned to 300 Hz and a fourth resonator tuned to 350 Hz.

The resonance frequencies may be chosen between 25 Hz and 1000 Hz.

The frequencies between 25 Hz and 1000 Hz are the frequencies in which prior art solutions have been least efficient at damping noise. Hence, tuning of the resonators between these frequencies enable a noticeable improvement when used together with existing sound damping systems, for example in engine compartments.

According to a second aspect of the present disclosure, the object is achieved by an assembly comprising a plurality of the sound absorbent device described above.

The sound absorbent devices are interconnected side-by side.

By interconnecting a plurality of sound absorbent devices side-by side, a scalable size of greater area can be covered by the sound absorbent devices, thereby improving the sound damping.

The assembly may further comprise sound transmission loss panels connected side-by-side with at least some of the sound absorbent devices, wherein the sound transmission loss panels are provided at an outer circumference of the assembly and/or between sound absorbent devices in a side-by-side fashion with respect to the sound absorbent devices such that the sound transmission loss panels interconnect the sound absorbent devices.

The sound transmission loss panel enable damping of higher frequency sounds than sounds for which the resonators of the base layer are tuned, thus improving noise reduction for a broader range of frequencies. By positioning sound transmission loss panels between sound absorbent devices, thickness of the assembly is kept low as compared to when using sound transmission loss panels sandwiched to the sound absorbent devices. A combination of both sandwiched panels and panels interconnecting sound absorbent, may be used.

According to a third aspect of the present disclosure, the object is achieved by a vehicle comprising the assembly and/or the sound absorbent device described above.

### Brief description of drawings

Fig. 1 shows a schematic top view of a sound absorbent device according to a first example not forming part of the claimed subject-matter.
Fig. 2 shows a side view in cross section A-A of the sound absorbent device also shown in fig. 1.
Fig. 3 shows an embodiment of the sound absorbent device according to the claimed subject-matter and alternative to the sound absorbent device also shown in fig. 2, however additionally comprising a sound transmission loss panel sandwiched to the base layer.
Fig. 4 shows an assembly comprising a plurality of sound absorbent devices attached side-by-side not forming part of the claimed subject-matter.
Fig. 5 shows an embodiment of an assembly comprising a plurality of sound absorbent devices attached side-by-side according to the claimed subject-matter, wherein the assembly further comprises sound transmission loss panels connected side-by-side with some of the sound absorbent devices. The sound transmission loss panels are provided between sound absorbent devices in a side-by-side fashion with respect to the sound absorbent devices such that the sound transmission loss panels interconnect the sound damping devices.

### Detailed description

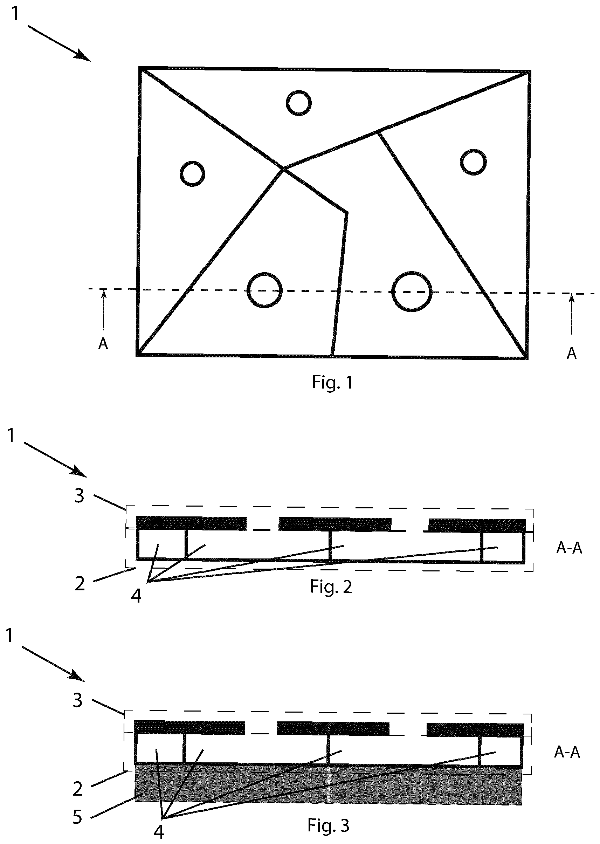

A sound absorbent device will hereinafter be described with reference to the appended drawings. As shown in figs. 1-2, the sound absorbent device 1 comprising a base layer 2 and a cover layer 3. The base layer 2 comprises at least one compartment 4. The cover layer 3 is attached to base layer 2 such that a respective cavity is formed in each compartment 4. The cavity is formed between the base layer 2 and the cover layer 3. The cover layer 3 comprises, for each compartment 4, a respective opening through the cover layer 3 to each respective cavity. Each opening through the cover layer 3 is configured such that a respective Helmholz resonator is formed in each compartment 4. Also, it should be understood that the compartment 4 is formed such that the only opening into the compartment, once the cover layer has been attached to the base layer, is the opening of the cover layer.

The base layer 2 and the cover layer 4 are made of thermoplastic material but may in other embodiments alternatively be made of any other suitable materials such as thermoset material, composite material, or metal.

The base layer 2 is formed by moulding of a composite material comprising reinforcement fibers, such as fiberglass, embedded in a matrix substance, such as 2k-resin or a thermoplastic or thermoset plastic material. In embodiments not forming part of the claimed invention, the base layer 2 could be shaped by injection moulding but could alternatively be shaped in any suitable material, using any suitable method, such as, hand layup, vacuum moulding, press forming or 3d-printing.

The cover layer 3 is attached to the base layer 2 by adhesive, but any other suitable method of attaching it may alternatively be used instead, such as friction welding or use of mechanical fasteners, such as screws.

In this embodiment, the base layer 2 has a uniform thickness of 20 mm, although any other suitable thickness may in be used instead, uniform or non-uniform. Typically, a suitable thickness for the base layer 2 is within the range of 5-35 mm.

In this embodiment, the cover layer 3 has a uniform thickness of 5 mm, although any other suitable thickness may in be used instead, uniform or non-uniform. Typically, a suitable thickness for the cover layer 3 is within the range of 1-15 mm. When using a uniform thickness cover layer 3, the thickness of the cover layer 3 is associated with the formation of necks of the Helmholz resonators, said necks having the same length as the thickness of the cover layer 3. Hence, a thickness of a uniform-thickness cover layer 3 should be adapted such that the performance of the Helmholz resonators is adequate. Similarly, the size and shape of the openings should be adapted such that the performance of the Helmholz resonators is adequate. The openings may be cut or stamped, for example cut using laser cutting or water jet. In the present embodiment, the cover layer 3 is formed by moulding of a composite material comprising reinforcement fibers, such as fiberglass, embedded in a matrix substance, such as 2k-resin or a thermoplastic or thermoset plastic material. The cover layer 3 is shaped by injection moulding but could alternatively be shaped in any suitable material, using any suitable method, such as, hand layup, vacuum moulding, press forming or 3d-printing.

In this embodiment, the base layer 2 comprises five compartments 4, as shown in fig. 1. Each compartment 4 is tuned for resonating at a different resonance frequency than the other ones of the compartments 4 by appropriately changing the shape and size of the cavity and of the opening of the cover layer. In this embodiment, the compartments are tuned for resonating at 150 Hz, 200 Hz, 250 Hz 300 Hz, and 350 Hz respectively.

In any embodiment, the resonance frequencies are typically chosen such that they are distributed within the range of 25 Hz to 1000 Hz.

In other embodiments of the sound absorbent device 1, a higher or lower number of compartments 4 may be provided and respective resonance frequencies tuned differently as appropriate depending on the distribution of sound to be dampened by the Helmholz resonators of the sound absorbent device 1.

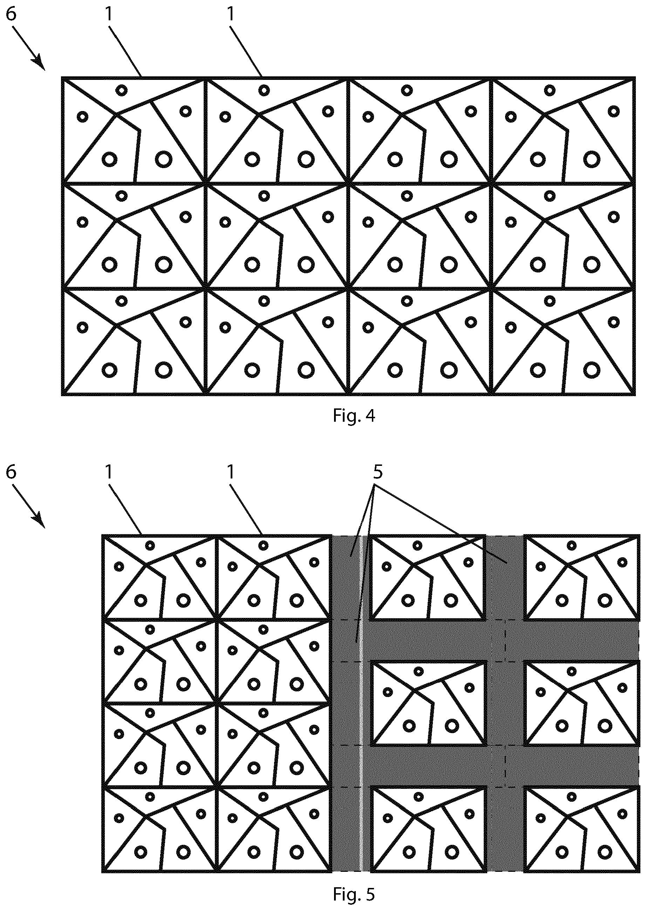

To also dampen sound above 1000 Hz, noise transmission loss panels 5 working by dampening sound using the mass properties or by using rather than by the Helmholz principle, are added, as shown in the embodiments of figs. 3 and 5 forming part of the claimed subject-matter.

The sound transmission loss panels 5 in figs. 3 and 5 are homogenous panels formed by moulding of a composite material comprising reinforcement fibers, such as fiberglass, embedded in a matrix substance, such as 2k-resin or a thermoplastic or thermoset plastic material. The sound transmission loss panels 5 is shaped from a sheet/plate material cut to size, but could alternatively be shaped in any suitable material, using any suitable method, such as, hand layup, vacuum moulding, extrusion, press forming or 3d-printing. The sound transmission loss panels 5 have a thickness of 25 mm. However, the thickness may in other embodiments alternatively be varied as suitable depending on available space. Generally, thicker sound transmission loss panels 5 achieve greater sound damping. Further, the sound transmission loss panels 5 may alternatively be hollow/provided with an inner void.

In the embodiment of fig. 3, the transmission loss panel 5 is integrated with the sound absorbent device 1 by sandwiching the sound transmission loss panel 5 to the base layer 2 on the opposite side of the base layer 2 with respect to the cover layer 3.

In the embodiment of fig. 5, the sound transmission loss panels 5 are instead provided side-by-side with the sound absorbent devices 1.

Sound transmission loss panels 5 could be provided both sandwiched to the base layer 2 and provided side-by-side with the sound absorbent devices 1.

As shown in figs. 4 and 5, a plurality of the sound absorbent devices 1 are typically used together in the form of an assembly 6 of sound absorbent devices 1 interconnected side-by-side. Such an assembly 6 enables covering a greater with sound absorbent Helmholz resonators whilst having the advantage that only a single assembly 6 needs to be handled and attached to a sub-structure, such as a chassis of a car or other vehicle, rather than a higher number of separate sound absorbent devices 1. Each sound absorbent device 1 may have the same design, thus repeated over the area covered by the assembly 6. However, the assembly 6 may alternatively comprise multiple differently designed sound absorbent devices 1, for example with differently tuned combinations of Helmholz resonators.

As mentioned above, and shown in fig. 5, such an assembly 6 comprises sound transmission loss panels 5 connected side-by-side with at least some of the sound absorbent devices 1, wherein the sound transmission loss panels 5 are provided at an outer circumference of the assembly 6 and/or between sound absorbent devices 1 in a side-by-side fashion with respect to the sound absorbent devices 1 such that the sound transmission loss panels 5 interconnect the sound absorbent devices 1.

Each sound transmission loss panel 5 provides damping of higher frequency sound than sound for which the resonators of the base layer 2 are tuned, thus improving noise reduction for a broader range of frequencies without increasing the thickness above the thickness of the sound absorbent devices 1.

**The** side-by-side arrangement effectively means that the sound absorbent devices 1 are arranged to form a sheet or panel-like structure.

| | |
|---|---|
| 1 | sound absorbent device |
| 2 | base layer |
| 3 | cover layer |
| 4 | compartment |
| 5 | sound transmission loss panel |
| 6 | assembly of a plurality of sound absorbent devices |

*Table of reference numerals*

## Claims

1. A sound absorbent device (1) comprising
a base layer (2) comprising at least one compartment (4),
a cover layer (3) attached to the base layer (2) such that a respective cavity is formed in each compartment (4), and comprising, for each compartment (4), a respective opening through the cover layer (3) to each respective cavity,
and a sound transmission loss panel (5) sandwiched to the base layer (2) on the opposite side of the base layer (2) with respect to the cover layer (3),
wherein each opening through the cover layer (3) is configured such that a respective Helmholz resonator is formed in each compartment (4),
**characterized in that the** sound transmission loss panel (5) is a homogenous panel formed by moulding of a composite material comprising reinforcement fibers embedded in a matrix substance.

2. The sound absorbent device (1) according to claims 1, wherein the base layer (2) has a thickness in the range of 5-35 mm, optionally of uniform thickness.

3. The sound absorbent device according to any one of claims 1-2, wherein the base layer (2) is a panel.

4. The sound absorbent device according to any one of claims 1-3, wherein the cover layer (3) is a sheet or plate.

5. The sound absorbent device (1) according to any one of claim 1-4, wherein the compartments have a depth in the range of 5-35 mm or a depth of at least 80% of the thickness of the base layer.

6. The sound absorbent device (1) according to any one of claims 1-5, wherein the cover layer (3) has a thickness in the range of 1-15 mm, optionally of uniform thickness.

7. The sound absorbent device (1) according to any one of claim 1-6, wherein the cover layer has a thickness of less than 20% of the thickness of the base layer.

8. The sound absorbent device (1) according to any one of claims 1-7, wherein the base layer (2) comprises a plurality of compartments (4), each tuned for resonating at a different resonance frequency than the other ones of the compartments (4).

9. The sound absorbent device (1) according to claim 8, wherein the base layer (2) comprises at least four of said plurality of compartments (4).

10. The sound absorbent device (1) according to any one of claims 8-9, wherein said resonance frequencies are between 25 Hz and 1000 Hz.

11. An assembly (6) comprising a plurality of sound absorbent devices (1) according to any one of claims 1-10 which are interconnected side-by-side.

12. The assembly (6) of claim 11, further comprising sound transmission loss panels (5) connected side-by-side with at least some of the sound absorbent devices (1), and provided at an outer circumference of the assembly (6) and/or between sound absorbent devices (1) in a side-by-side fashion with respect to the sound absorbent devices (1) such that the sound transmission loss panels (5) interconnect the sound absorbent devices (1).

13. A vehicle comprising the sound absorbent device (1) according to any one of claims 1-10 and/or the assembly (6) according to any one of claims 11-12.

## Patentansprüche

1. Schalldämpfungsvorrichtung (1) umfassend eine Basisschicht (2) umfassend mindestens eine Kammer (4),
eine Abdeckschicht (3), die an der Basisschicht (2) so angebracht ist, dass in jeder Kammer (4) ein entsprechender Hohlraum gebildet wird, und die für jede Kammer (4) eine entsprechende Öffnung durch die Abdeckschicht (3) zu jedem entsprechenden Hohlraum umfasst,
und eine Schallübertragungsverlustplatte (5), die an der Basisschicht (2) auf der der Abdeckschicht (3) gegenüberliegenden Seite der Basisschicht (2) eingelegt ist,
wobei jede Öffnung durch die Abdeckschicht (3) so konfiguriert ist, dass in jeder Kammer (4) ein entsprechender Helmholz-Resonator gebildet wird, **dadurch gekennzeichnet, dass** die Schallübertragungsverlustplatte (5) eine homogene Platte ist, die durch Formen eines Verbundmaterials gebildet wird, das in eine Matrixsubstanz eingebettete Verstärkungsfasern umfasst.

2. Schalldämpfungsvorrichtung (1) nach Anspruch 1, wobei die Basisschicht (2) eine Dicke im Bereich von 5-35 mm aufweist, optional mit gleichmäßiger Dicke.

3. Schalldämpfungsvorrichtung nach einem der Ansprüche 1-2, wobei die Basisschicht (2) ein Platte ist.

4. Schalldämpfungsvorrichtung nach einem der Ansprüche 1-3, wobei die Abdeckschicht (3) ein Blech oder eine Platte ist.

5. Schalldämpfungsvorrichtung (1) nach einem der Ansprüche 1-4, wobei die Kammern eine Tiefe im Bereich von 5 bis 35 mm oder eine Tiefe von mindestens 80 % der Dicke der Basisschicht aufweisen.

6. Schalldämpfungsvorrichtung (1) nach einem der Ansprüche 1-5, wobei die Abdeckschicht (3) eine Dicke im Bereich von 1-15 mm aufweist, optional mit gleichmäßiger Dicke.

7. Schalldämpfungsvorrichtung (1) nach einem der Ansprüche 1-6, wobei die Abdeckschicht eine Dicke von weniger als 20 % der Dicke der Basisschicht aufweist.

8. Schalldämpfungsvorrichtung (1) nach einem der Ansprüche 1-7, wobei die Basisschicht (2) mehrere Kammern (4) umfasst, die jeweils so abgestimmt sind, dass sie mit einer anderen Resonanzfrequenz als die anderen Kammern (4) in Resonanz schwingen.

9. Schalldämpfungsvorrichtung (1) nach Anspruch 8, wobei die Basisschicht (2) mindestens vier der mehreren Kammern (4) umfasst.

10. Schalldämpfungsvorrichtung (1) nach einem der Ansprüche 8-9, wobei die Resonanzfrequenzen zwischen 25 Hz und 1000 Hz liegen.

11. Anordnung (6) umfassend mehrere Schalldämpfungsvorrichtungen (1) nach einem der Ansprüche 1-10, die Seite an Seite miteinander verbunden sind.

12. Anordnung (6) nach Anspruch 11, die ferner Schallübertragungsverlustplatten (5) umfasst, die Seite an Seite mit mindestens einigen der Schalldämpfungsvorrichtungen (1) verbunden sind und an einem Außenumfang der Anordnung (6) und/oder zwischen Schalldämpfungsvorrichtungen (1) in Bezug auf die Schalldämpfungsvorrichtungen (1) Seite an Seite vorgesehen sind, so dass die Schallübertragungsverlustplatten (5) die Schalldämpfungsvorrichtungen (1) miteinander verbinden.

13. Fahrzeug umfassend eine Schalldämpfungsvorrichtung (1) nach einem der Ansprüche 1-10 und/oder die Anordnung (6) nach einem der Ansprüche 11-12.

## Revendications

1. Dispositif absorbant le bruit soit (1) comprenant une couche de base (2) comprenant au moins un compartiment (4),
une couche de recouvrement (3) fixée à la couche de base (2) de telle sorte qu'une cavité respective soit formée dans chaque compartiment (4), et comprenant, pour chaque compartiment (4), une ouverture respective à travers la couche de recouvrement (3) vers chaque cavité respective,
et un panneau de perte de transmission acoustique (5) pris en sandwich avec la couche de base (2) sur le côté opposé de la couche de base (2) par rapport à la couche de recouvrement (3),
chaque ouverture à travers la couche de recouvrement (3) étant configurée de telle sorte qu'un résonateur de Helmholz respectif soit formé dans chaque compartiment (4),
**caractérisé en ce que** le panneau de perte de transmission acoustique (5) est un panneau homogène formé par moulage d'un matériau composite comprenant des fibres de renforcement noyées dans une substance matricielle.

2. Dispositif absorbant le bruit (1) selon la revendication 1, dans lequel la couche de base (2) a une épaisseur dans la plage de 5 à 35 mm, facultativement une épaisseur uniforme.

3. Dispositif absorbant le bruit selon l'une quelconque des revendications 1 et 2, dans lequel la couche de base (2) est un panneau.

4. Dispositif absorbant le bruit selon l'une quelconque des revendications 1 à 3, dans lequel la couche de recouvrement (3) est une feuille ou une plaque.

5. Dispositif absorbant le bruit (1) selon l'une quelconque des revendications 1 à 4, dans lequel les compartiments ont une profondeur dans la plage de 5 à 35 mm ou une profondeur représentant au moins 80 % de l'épaisseur de la couche de base.

6. Dispositif absorbant le bruit (1) selon l'une quelconque des revendications 1 à 5, dans lequel la couche de recouvrement (3) a une épaisseur dans la plage de 1 à 15 mm, facultativement une épaisseur uniforme.

7. Dispositif absorbant le bruit (1) selon l'une quelconque des revendications 1 à 6, dans lequel la couche de recouvrement a une épaisseur inférieure à 20 % de l'épaisseur de la couche de base.

8. Dispositif absorbant le bruit (1) selon l'une quelconque des revendications 1 à 7, dans lequel la couche de base (2) comprend une pluralité de compartiments (4), chacun étant adapté pour résonner à une fréquence différente de celle des autres compartiments (4).

9. Dispositif absorbant le bruit (1) selon la revendication 8, dans lequel la couche de base (2) comprend au moins quatre de la pluralité de compartiments (4).

10. Dispositif absorbant le bruit (1) selon l'une quelconque des revendications 8 et 9, dans lequel lesdites fréquences de résonance sont comprises entre 25 Hz et 1000 Hz.

11. Ensemble (6) comprenant une pluralité de dispositifs absorbant le bruit (1) selon l'une quelconque des revendications 1 à 10 qui sont interconnectés côte à côte.

12. Ensemble (6) selon la revendication 11, comprenant en outre des panneaux de perte de transmission sonore (5) connectés côte à côte avec au moins certains des dispositifs absorbant le bruit (1), et prévus sur une circonférence extérieure de l'ensemble (6) et/ou entre des dispositifs absorbant le bruit (1) de manière à être côte à côte par rapport aux dispositifs absorbant le bruit (1), de sorte que les panneaux de perte de transmission sonore (5) sont interconnectés avec les dispositifs absorbant le bruit (1).

13. Véhicule comprenant le dispositif absorbant le bruit (1) selon l'une quelconque des revendications 1 à 10 et/ou l'ensemble (6) selon l'une quelconque des revendications 11 à 12.
